# EUROPEAN PATENT APPLICATION

(11) **EP 4 262 139 A1**
(43) Date of publication of application: **18.10.2023**
(21) Application number: 23167826.9
(22) Date of filing: 13.04.2023
(51) Int. Cl.: H04L 9/08

(54) **USER BASE DEVICE, CRYPTOGRAPHIC COMMUNICATION SYSTEM, AND CRYPTOGRAPHIC COMMUNICATION METHOD**

(30) Priority: 14.04.2022 JP 2022066919
(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: TSUDA, Kazuma, Kanagawa, 212-0013 (JP); MATSUO, Masakatsu, Tokyo, 100-0005 (JP); KOBAYASHI, Manabu, Tokyo, 100-0005 (JP); ANDO, Koki, Tokyo, 100-0005 (JP)
(74) Representative: Marks & Clerk LLP

(57) **Abstract**

According to one embodiment, a user base device A has a cryptographic module (101) a key sharing module (102). The key sharing module (102) restores and disperses a cryptographic key used to generate the encrypted data. The key sharing module (102) includes a quantum cryptographic communication device (102a, 102b) applicable to a plurality of front ends. The front ends are used to receive dispersed cryptographic key from different routes (400, 600), and to output dispersed cryptographic key to different routes (400, 600) .

## Description

### FIELD

Embodiments described herein relate generally to a user base device, cryptographic communication system, and cryptographic communication method.

### BACKGROUND

Public key cryptography methods currently available depend on the computational security by which data cannot be decoded by conventional computers and algorithms within an available time. In future, however, when quantum computers are widely used, such computational security will not be secured, and secure communication through conventional cryptography methods cannot be provided. Thus, quantum cryptography which does not depend on the computational security is anticipated as a cryptography method with information-theoretic security.

However, in a system using the quantum cryptography, there is a restriction in a distance between users in distant locations to share a direct key because an optical cable is used for such a system. Thus, in order to extend the communication distance, there is a relaying technique for a quantum cryptographic key using intermediate nodes (or relay nodes). Through the relaying technique, the quantum cryptographic key can be shared between the users in distant locations.

However, quantum key distribution devices using quantum cryptography protocol BB84 (hereinafter, BB84QKD devices) are expensive, and users cannot own such expensive devices in a large number.

Therefore, there is a technical concept that delivery of cryptographic key (random number key) from a routing base (key distribution server) to a user base is achieved through the Internet to decrease costs.

However, such a technical concept has such a risk that the cryptographic key (random number key) may be intercept on the Internet, which is a so-called last one mile problem.

### BRIEF DESCRIPTION OF THE DRAWINGS

FIG. 1 illustrates the structure of a quantum cryptographic communication system which is a premise of the present invention.
FIG. 2 illustrates the structure of an embodiment of the present application.
FIG. 3 illustrates the structural examples of key sharing modules 102 and 202 of FIG. 2.
FIG. 4 illustrates an example of device arrangement within a base A.
FIG. 5A illustrates an example of device arrangement within a relay node.
FIG. 5B illustrates an example of device arrangement within a relay node.
FIG. 6 illustrates the structure of another embodiment of the present application.
FIG. 7 is a flowchart of an example of a process where a cryptographic key is dispersed and allocated to a plurality of paths (routes).
FIG. 8 is a flowchart of an example of a process of collecting keys dispersed in a plurality of routes and restoring the key.
FIG. 9 illustrates a type setting the aforementioned key transmission routes, which is a static type.
FIG. 10 illustrates a type setting the aforementioned key transmission routes, which is a dynamic type.
FIG. 11 illustrates an example of a combination of a CVQKD device and a BB84QKD device in a relay node and an intermediate node.
FIG. 12 illustrates another example of a combination of a CVQKD device and a BB84QKD device in a relay node and an intermediate node.
FIG. 13 illustrates yet another example of a combination of a CVQKD device and a BB84QKD device in a relay node and an intermediate node.
FIG. 14 illustrates an example of a method of generation of a cryptographic key (random number key) 132 in a key sharing module and encryption of plaintext data 131 in the base A.
FIG. 15 illustrates a method of generation of dispersed cryptographic keys.
FIG. 16A illustrates a method of restoration of dispersed cryptographic keys.
FIG. 16B illustrates a method of restoration of dispersed cryptographic keys together with FIG. 16A.
FIG. 17 illustrates an example of encryption of plaintext data 131 in the base A.
FIG. 18 illustrates another example of the method of generation of dispersed cryptographic keys.
FIG. 19A illustrates another example of the method of restoration of dispersed cryptographic keys.
FIG. 19B illustrates another example of the method of restoration of dispersed cryptographic keys together with FIG. 19A.

### DETAILED DESCRIPTION

Hereinafter, embodiments will be explained with reference to the accompanying drawings.

In general, according to one embodiment, the present application presents a user base device, cryptographic communication system, and cryptographic communication method with improved security, in which a user base, relay node to deliver a cryptographic key (random number key) used in the user base, and relay node to receive the cryptographic key from the user base are realized with relatively cost-effective QKD devices (for example, continuous variable QKDs, or CVQKDs) .

Furthermore, the present application presents a user base device, cryptographic communication system, and cryptographic communication method in which a plurality of paths (routes) are utilized to disperse a cryptographic key (random number key) to transmit dispersed random number keys and to receive the dispersed random number keys where the cryptographic key (random number key) is prevented from being completely restored in a halfway through the paths.

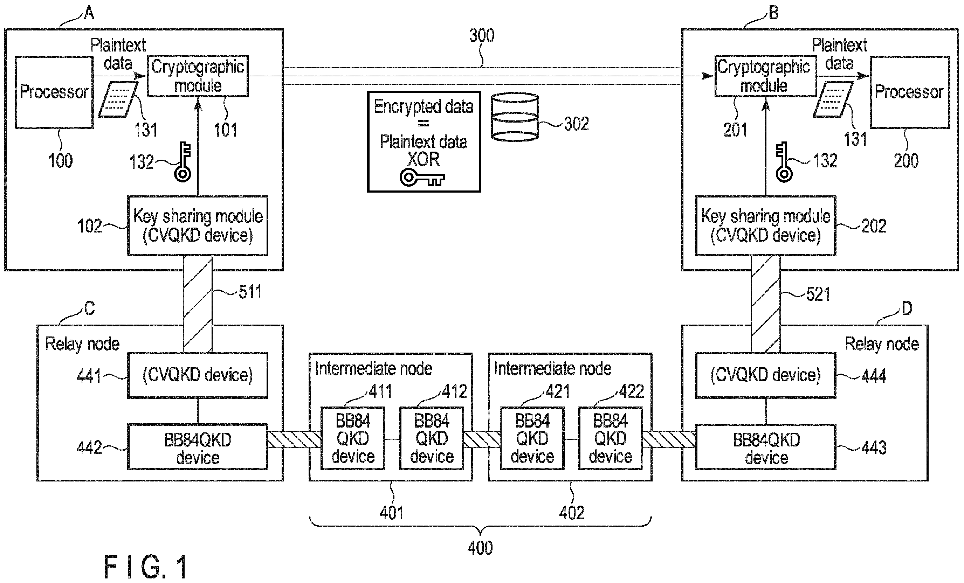

FIG. 1 illustrates a structural example of a quantum cryptographic communication system which is a premise of the present invention. In this example, A is a sender first base (or may be referred to as device of user A) and B is a receiver second base (or may be referred to as device of user B). Note that the bases A and B are communicable to each other; however, this example will be explained with the first base A being the sender and the second base B being the receiver. The first base A and the second base B are connected through an encrypted data transmission system 300. The encrypted data transmission system 300 is structured on the Internet.

The first base A includes a processor 100, cryptographic module 101, and key sharing module 102. The second base B includes a processor 200, cryptographic module 201, and key sharing module 202.

In this example, the key sharing module 102 of the first base A and the key sharing module 202 of the second base B are each structured with a CVQKD device (or may be referred to as second type QCD device).

The key sharing module 102 of the first base A is connected to a relay node C through a quantum key delivery path 511. Furthermore, the key sharing module 202 of the second base B is connected to a relay node D through a quantum key delivery path 521.

The relay node C includes a CVQKD device 411 and a BB84QKD device (QKD device using quantum cryptographic protocol BB84, and may be referred to as first type QKD device) 442, and the QKD devices can exchange a random number key therebetween.

The relay node D has a similar structure as with the relay node C, and includes a CVQKD device 444 and a BB84QKD device 443 (first type QKD device), and the QKD devices can exchange a random number key therebetween.

The BB84QKD device 442 of the relay node C and the BB84QKD device 443 of the relay node D are connected through the cryptographic key transmission path 400 which connects intermediate nodes 401 and 402. The intermediate node 401 includes a BB84QKD device 411 and a BB84QKD device 421, and the intermediate node 402 includes a BB84QKD device 411 and a BB84QKD device 422. The cryptographic key transmission path 400 distributes quantum cryptographic keys in a so-called nested structure, where distribution is performed such that key A1 is converted into key A2, and then key A2 is converted into key A3 and finally returned into key A1. Through such distribution, intercept is prevented and security is increased.

In the aforementioned system, the key sharing module 102 generates a cryptographic key (random number key) 132. The cryptographic module 101 uses the cryptographic key (random number key) 132 from the key sharing module 102 to encrypt plaintext data 131.

Then, the encrypted data 302 is transmitted to the second base B through the encrypted data transmission system 300. Note that the plaintext data 131 is read from a memory device, which is not shown, in the processor 100. Furthermore, the encrypted data 302 is data obtained from an exclusive-or (XOR) operation of the plaintext data 131 and the cryptographic key 132. Furthermore, the encrypted data transmission system 300 is the Internet.

On the other hand, the relay node C receives the cryptographic key (random number key) sent from the key sharing module 102 of the base A at the CVQKD device 441, then, inputs the key to the BB84QKD device 442, and then, outputs the key from the BB84QKD device 442 to the external cryptographic key transmission path 400, as a relaying process.

The BB84QKD device 442 outputs a quantum key (optical communication cryptographic key) to the BB84QKD device 411 of the intermediate node 401 of the cryptographic key transmission path 400.

In the intermediate node 401, the random number key from the BB84QKD device 411 is received by the BB84QKD device 412. Then, the BB84QKD device 412 transmits the random number key to the BB84QKD device 421 of the intermediate node 402. In the intermediate node 402, the random number key from the BB84QKD device 421 is received by the BB84QKD device 422.

As explained above, the random number key distribution is performed through the quantum key delivery by the BB84QKD devices alone in the intermediate nodes 401 and 402 of the cryptographic key transmission path 400.

The random number key delivered as above is received by the BB84QKD device 443 of the relay node D in the proximity of the base B. The random number key received by the BB84QKD device 443 is sent to the CVQKD device 444. The CVQKD device 444 distributes the random number key to the key sharing module 202 in the base B through the quantum key delivery path 521.

The key sharing module 202 supplies the cryptographic (random number) key 132 to the cryptographic module 201. The cryptographic module 201 performs a decryption operation using the encrypted data 302 obtained from the encrypted data transmission system 300 and the cryptographic key 132 to obtain the original plaintext data 131. The plaintext data is taken by the processor 200.

With the aforementioned system, the first quantum key delivery path 511 connects between the first relay node C and the first key sharing module 102, wherein the delivery of the cryptographic key is performed using the CVQKD devices therein. Similarly, the quantum key delivery path 521 connects between the second relay node D and the second key sharing module 202, wherein the delivery of the cryptographic key is performed using the CVQKD devices therein.

As a result, with the aforementioned cryptographic communication system and the cryptographic communication method, the cryptographic key delivery within a possible intercept area between the base A and the relay node C is performed through the quantum key delivery path 511, the security performance is high. The same applies to the area between the base B and the relay node D.

However, there still is a risk even in the structure of FIG. 1. Thus, the inventors planned to further improve the security performance of the aforementioned cryptographic communication system.

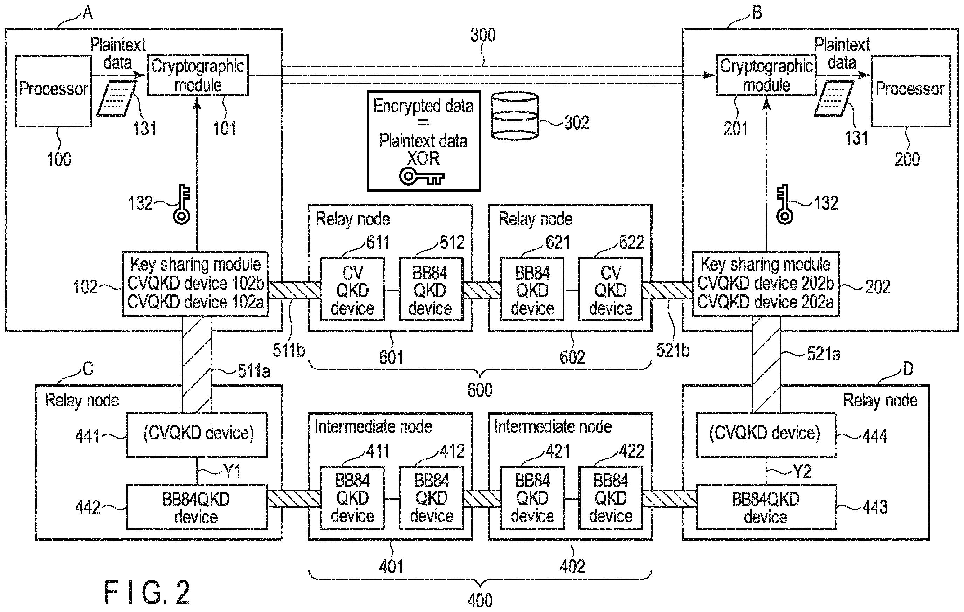

FIG. 2 illustrates an embodiment of the present application. In the present embodiment, a possible intercept in a connection line Y1 between the BB84QKD device 442 and the CVQKD device 441 in the relay node C and a possible intercept in a connection line Y2 between the BB84QKD device 443 and the CVQKD device 444 in the relay node D are dealt with for better security of the cryptographic key.

The same elements as in FIG. 1 are referred to by the same reference numbers for explanation. The system of FIG. 2 further includes a second cryptographic key transmission path 600 between the bases A and B.

In this example, the aforementioned cryptographic key transmission path 400 will be referred to as first cryptographic key transmission path 400, and the cryptographic key transmission path 600 will be referred to as second cryptographic key transmission path 600.

The second cryptographic key transmission path 600 connects a relay node 601 and a relay node 602 in series. The relay node 601 includes a CVQKD device 611 and a BB84QKD device 612 connected in series. Similarly, the relay node 602 includes a BB84QKD device 621 and a CVQKD device 622 connected in series. As a matter of course, multiple intermediate nodes may be arranged between the relay nodes 601 and 602 as with the first cryptographic key transmission path 400.

With the aforementioned structure, multiple (two in this example) cryptographic key transmission paths 400 and 600 are provided. Thus, two CVQKD devices 102a and 102b to be connected to the CVQKD devices in the relay node of each path 400 and 600 are disposed inside the key sharing module 102.

That is, the key sharing module 102 of the base A includes the CVQKD device 102a connected to the CVQKD device 441 of the relay node C (through optical cable 511a), and the CVQKD device 102b connected to the CVQKD device 611 of the relay node 601 of the second cryptographic key transmission path 600 (through optical cable 511b).

Furthermore, the key sharing module 202 of the base B includes, as with the structure of the base A, a CVQKD device 202a connected to the CVQKD device 444 of the relay node D (through optical cable 521a) and a CVQKD device 202b connected to the CVQKD device 622 of the relay node 602 of the second cryptographic key transmission path 600 (through optical cable 521b).

With the aforementioned structure, a cryptographic key is dispersed at the sender side and the receiver side, wherein the cryptographic key is shared using a plurality of cryptographic key transmission paths 400 and 600. Thus, even if one of the nodes (intermediate nodes and relay nodes) on the cryptographic key transmission paths is attacked, the attacker only acquires a part of the dispersed cryptographic keys, and the cryptographic key as a whole cannot be acquired. Thus, with the aforementioned structure, users can securely share the cryptographic key for secure cryptographic communication.

Note that, a CVQKD device is realized cheaper than a BB84QKD device. The BB84QKD devices adopt a quantum detector configured to capture light as particle photons, thus requiring a high performance, and thus are expensive. On the other hand, the CVQKD devices adopt a conventional optical detector configured to capture light as wave intensity, and thus are realized cheaper. Note that, they can be connected through an optical cable, and can coexist in the same system. The present system uses the coexistence characteristics, and achieve higher communication security with lower costs.

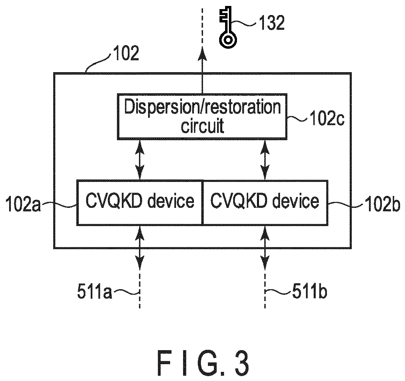

FIG. 3 illustrates the structure example of the key sharing module 102 of the base A of FIG. 2 as a representative example. In the present embodiment, two CVQKD devices 102a and 102b are connected to a dispersion/restoration circuit 102c. The CVQKD device 102a is connected to the relay node C through the optical cable 511a, and the CVQKD device 102b is connected to the relay node 601 through the optical cable 511b.

The key sharing module 202 of FIG. 2 has the same structure as above, and in the key sharing module 202, CVQKD devices are connected to the optical cables 521a and 521b, respectively.

Thus, the base A and the base B of the present embodiment as a device are structured as follows. The user base device A includes a cryptographic module 101 to transmit encrypted data and a key sharing module 102 to restore or disperse a cryptographic key used to generate the encrypted data.

The key sharing module 102 includes, in order to deliver a plurality of cryptographic keys (a plurality of random number keys) dispersed based from the cryptographic key through different routes and to receive the dispersed cryptographic keys sent from the different routes, a plurality of CVQKD devices 102a and 102b quantum connected to a CVQKD device in a relay node provided with a first step of the different routes and a dispersion/restoration circuit 102c of the cryptographic key to which the CVQKD devices are connected.

Furthermore, in the aforementioned example, the cryptographic communication system is structured as follows. The cryptographic communication system includes a first base A and a second base B which are connected with each other through an encrypted data transmission system. A first relay node C and the first base A are quantum connected with each other through CVQKD devices thereof to relay the dispersed cryptographic keys. Furthermore, A second relay not D and the second base B are quantum connected with each other through CVQKD devices thereof to relay the dispersed cryptographic keys. Furthermore, a third relay node 601 and the first base A are quantum connected with each other through CVQKD devices thereof to relay the dispersed cryptographic keys.

Furthermore, a fourth relay node 602 and the second base B are quantum connected with each other through CVQKD devices to relay the dispersed cryptographic keys, wherein
the first relay node C and the second relay node D are connected through BB84QKD devices thereof, and the third relay node 601 and the fourth relay node 602 are connected through BB84QKD devices.

Now, the structure will be explained further with reference to the device exterior in each of the blocks (base, relay node, and intermediate node, for example).

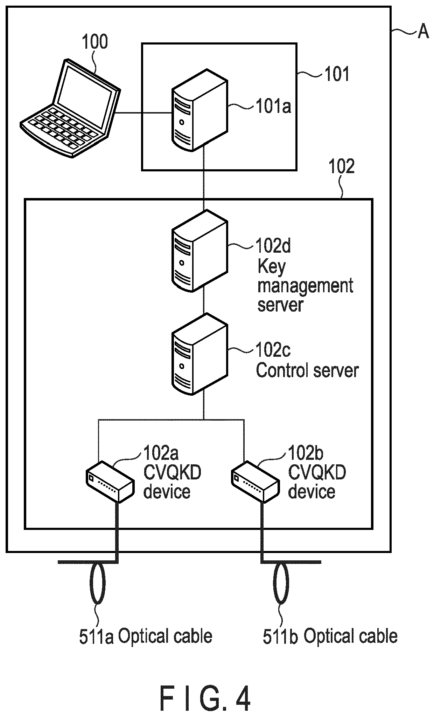

FIG. 4 illustrates the structural example of device arrangement in the base A and the base B. In this example, the base A will be used as a representative for explanation. The cryptographic module 101 includes a cryptographic communication server 101a, and the processor 100 includes, for example, a personal computer. Furthermore, the key sharing module 102 includes CVQKD devices 102a and 102b, control server 102c, and key management server 102d.

The cryptographic communication server 101a has a function to encrypt plaintext data using a cryptographic key shared by the key management serve 102d and a function to transmit the encrypted data to the other base B in response to a request of application from the processor 100.

The control server 102c of the key sharing module 102 collectively controls the whole key sharing module 102. The key management server 102d has a function to share the cryptographic key with the other base B. Furthermore, the key management server 102d has a function to disperse or restore the cryptographic key as explained above with reference to FIG. 3.

The CVQKD devices 102a and 102b are, as in FIG. 2 or FIG. 3, connected to the CVQKD device 441 of the relay node C through the optical cable 511a, and the CVQKD device 102b is connected to the CVQKD device 611 of the relay node 601 through the optical cable 511b. The same applies to the base B.

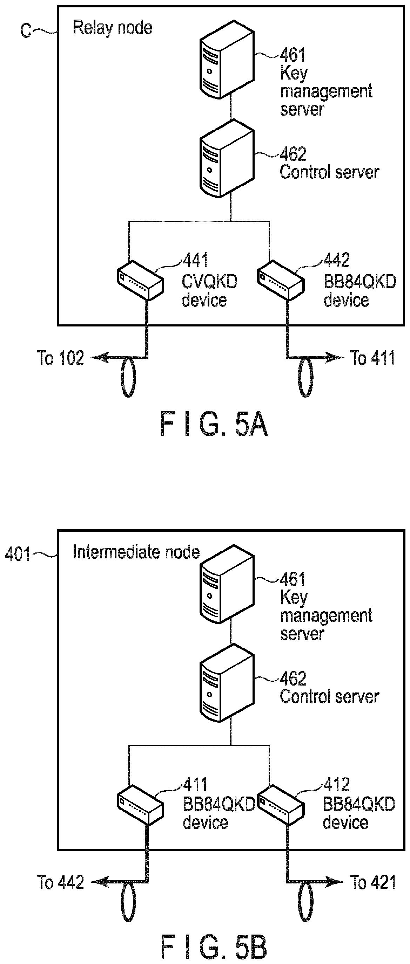

FIG. 5A illustrates an example of the device arrangement in the relay nodes C and D. In this example, the relay node C will be used as a representative for explanation. The relay node C includes a key management server 461, control server 462, CVQKD device 441, and BB84QKD device 442.

The relay node C is a base to fill the last one mile by connecting a CVQKD device and a BB84QKD device. The relay node C includes the cost-effective CVQKD device 441 to be connected to the user base A and the BB84QKD device 442 to be connected to the BB84QKD device 411 in the intermediate node 401. The connections here are achieved by optical cables.

The control server 462 has a function to share a quantum key by communicating with the user base A using the CVQKD device 441 through the optical fiber. Furthermore, the control server 462 has a function to share a quantum key by communicating with the BB84QKD device 411 of the intermediate node 401 using the BB84QKD device 442 through the optical fiber.

The key management server 461 has a function to route, through a conventional network, the cryptographic keys (dispersed random number keys) to be shared between user bases using a quantum key obtained from the control server 462 to a next node (user base, relay node, intermediate node).

FIG. 5B illustrates an example of the device arrangement of the intermediate nodes 401 and 402. In this example, the intermediate node 401 will be used as a representative for explanation. The intermediate node 401 includes a key management server 461, control server 462, BB84QKD device 411, and BB84QKD device 412.

The intermediate node is a base relaying the dispersed cryptographic keys (dispersed random number keys) by the BB84QKD devices 411 and 412.

The control server 462 has a function to share a quantum key using the BB84QKD devices 411 and 412 through the relay node or the intermediate node and the optical fiber. The key management server 461 has to route, through a conventional network, the cryptographic keys to be shared between user bases using the quantum key obtained from the control server 462 to a next node (user base, relay node, intermediate node).

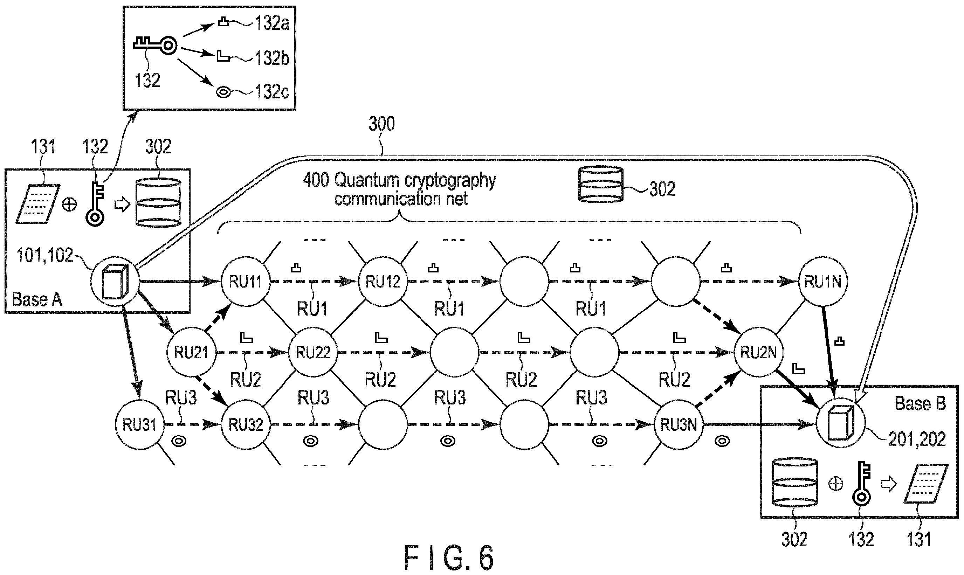

FIG. 6 illustrates another embodiment. In the present embodiment, the cryptographic key (dispersed cryptographic keys) is exchanged between a plurality of user bases through a mesh-type quantum cryptographic distribution net. The same functioning elements as in the aforementioned embodiment will be referred to by the same reference numbers for explanation.

In the present embodiment, because of the mesh-type quantum cryptographic distribution net, the number of cryptographic key transmission routes can be set optionally, and thus, many key transmission paths (routes) can be established. A setting type of many key transmission paths (routes) may be a static type or a dynamic type.

The example of FIG. 6 illustrates a three key transmission routes structure. A case where encrypted data is transmitted from the base A to the base B will be explained.

A first key transmission route RU1 is structured between a relay node RU11 in the base A side and a relay node RU1N in the base B side, and is structured by the intermediate nodes RU12, RU13, ..., and RU1(N-1) .

A second key transmission route RU2 is structured between a relay node RU21 in the base A side and a relay node RU2N in the base B side, and is structured by the intermediate nodes RU22, RU23, ..., and RU2(N-1) .

A third key transmission route RU3 is structured between a relay node RU31 in the base A side and a relay node RU3N in the base B side, and is structured by the intermediate nodes RU32, RU33, ..., and RU3(N-1).

In this example, the cryptographic key 132 is divided into three dispersed cryptographic keys 132a, 132b, and 132c, which are transmitted from the base A to the base B through key transmission routes RU1, RU2, and RU3, respectively. The cryptographic module 101 of the base A is transmitted to the cryptographic module 201 of the base B through the encrypted data transmission system 300.

Note that, for easier understanding, the key shape is simply divided into three in the figure. However, there are various encryption methods available, and division and dispersion are different, and the method of generation of such cryptographic keys will be explained later.

On the other hand, the dispersed cryptographic keys (or dispersed random number keys) 132a, 132b, and 132c are transmitted from the key sharing module 102 to the relay nodes RU11, RU21, and RU31, respectively, forming their respective routes. Each of the relay nodes RU11, RU21, and RU31 is structured the same as the structure shown in FIGS. 2 and 5A. The key sharing module 102 of the base A includes three CVQKD devices to transmit each of the relay nodes RU11, RU21, and RU31 and the cryptographic keys 132a, 132b, and 132c.

The intermediate nodes RU12, RU13, ..., and RU1(N-1), intermediate nodes RU22, RU23, ..., and RU2(N-1), and intermediate nodes RU32, RU33, ..., and RU3(N-1) are structured the same as the structure shown in FIGS. 2 and 5B. The key sharing module 202 includes three CVQKD devices to receive the cryptographic keys 132a, 132b, and 132c from the relay nodes RU1N, RU2N, and RU3N, respectively.

Note that, the number of the intermediate nodes can be optionally adjusted based on a distance between the base A and the base B. Thus, the intermediate node may not necessary depending on cases, and the relay node in the base A side and the relay node in the base B side are directly connected in some cases. Furthermore, in the present embodiment, since the mesh type quantum cryptographic distribution net is used, the number of routes can be changed.

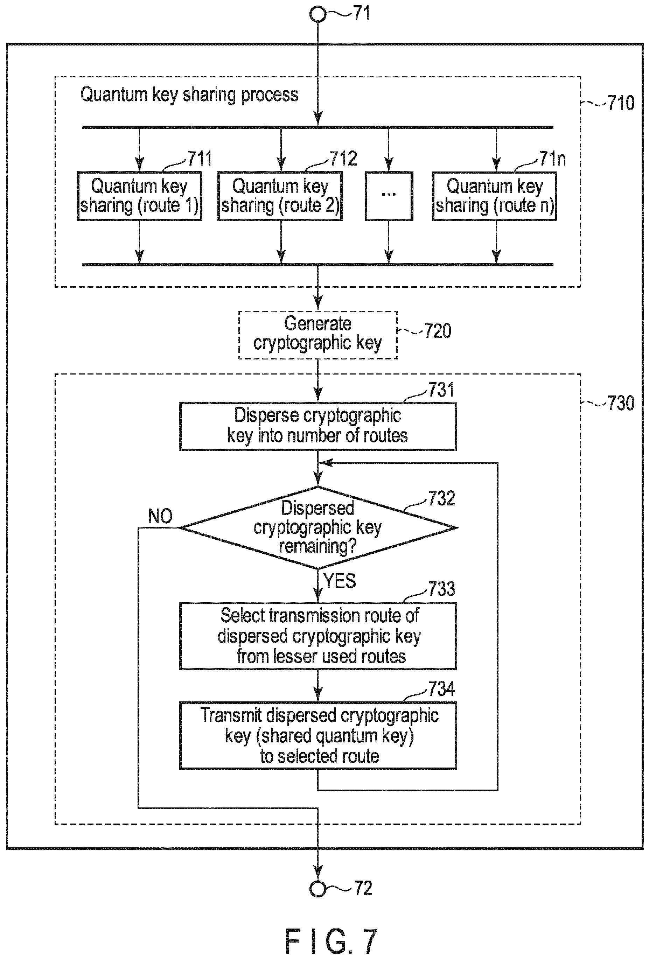

FIG. 7 is a flowchart of a process performed in a case where a cryptographic key is dispersed and dispersed cryptographic keys are allocated to a plurality of paths (routes). The process function is provided within each of the key sharing modules 102 and 202.

The process function can be roughly divided into a quantum key sharing process block 710, cryptographic key generation block 720, cryptographic key dispersion process part 730.

The quantum key sharing process block 710 takes a command from an input part 71. Based on the command, the quantum key sharing process block 710 prepares a plurality of optional routes to share a quantum key in advance. For example, routes 1 to n are prepared. Information of each route is arrangement information of relay nodes and intermediate nodes between the bases A and B explained above, for example. The routes 1 to n are not used at the same time, and the quantum key sharing process block 710 selects and specifies routes which have been least used among the routes 1, 2, 3, ..., and n. Thus, profile information of each route includes information of use number.

Then, the cryptographic key generation block 720 generates, after a plurality of routes are specified, a cryptographic key used for distribution from a base to another base.

Then, the cryptographic key dispersion process part 730 processes the cryptographic key as follows. Initially, the cryptographic key is dispersed (step 731). In the case, the number of dispersion is set to the same number as the routes specified, and dispersed cryptographic keys are each stored in a memory. Note that the dispersion of the cryptographic key may be, as will be described later, regarded as a result of generated random number.

Then, whether or not the dispersed cryptographic key remains in the memory is checked (step 732). If there is a remaining cryptographic key, a transmission route of the dispersed cryptographic key is selected, and a less-used route is selected, for example (step 733). Then, the dispersed key (quantum key to be shared) is transmitted to the selected route, and returns to step 732 (from step 734). Steps 732 to 734 are repeated, and if there is no remaining dispersed key, an end notification is output to an output part 72.

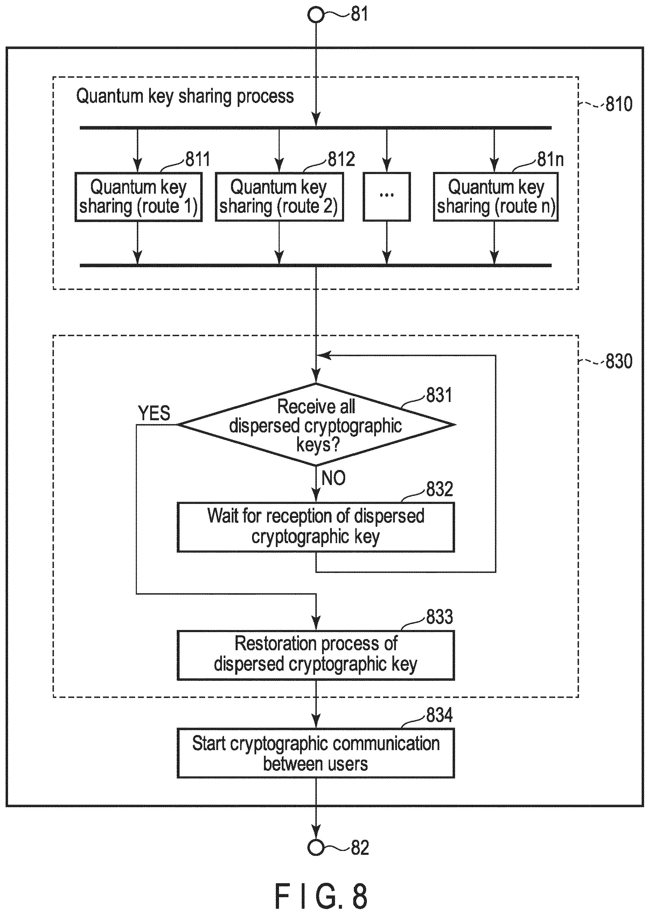

FIG. 8 is a flowchart of a process of collecting the cryptographic keys dispersed in a plurality of paths (routes) to restore the original cryptographic key. The process is provided within the key sharing modules 102 and 202.

The process block can be roughly divided into a quantum key sharing process block 810 and a dispersed cryptographic key restoring process part 830.

The quantum hey sharing process block 810 takes a command from an input part 81. Based on the command, the quantum key sharing process block 810 structures a plurality of routes (a plurality of routes prepared in advance) to share a quantum key (as with the routes 1 to n of FIG. 7). Note that the information of the routes actually used is confirmed mutually between the bases A and B in advance.

The dispersed cryptographic keys taken from a plurality of routes are each input into the dispersed cryptographic key restoring process part 830. The restoring process part 830 determines whether or not all the dispersed cryptographic keys are received (step 831). If all the keys are received, a restoring process of the original key is performed using the dispersed cryptographic keys (step 833). If all the dispersed cryptographic keys are not collected in step 831, reception of the dispersed cryptographic keys is waited, and then, the process returns to step 831 (steps 831 and 832).

In step 833, if all the dispersed cryptographic keys are collected, and the original cryptographic key is restored, and then, the cryptographic key is given to the cryptographic module 201 to perform restoration of the encrypted data. That is, the cryptographic communication between users is started (step 834). The information indicative of the start of cryptographic communication is output from an output part 82.

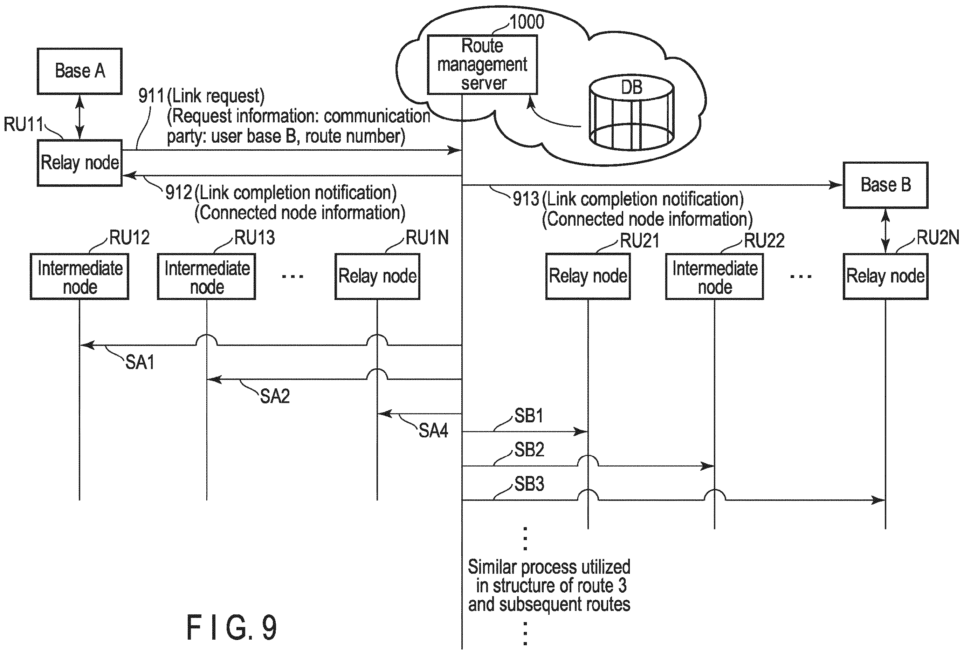

FIG. 9 illustrates how the aforementioned routes are structured (method of structuring a plurality of routes: static type). In the example of FIG. 7, the routes from the base A to the base B are determined in advance; however, in FIG. 9, a structuring method of each route will be explained.

First, as a premise, a route management server 1000 is arranged on the cloud, and stores node information on the routes in the database. That is, the route management server 1000 manages many nodes structuring the quantum cryptographic distribution net, and includes positional (address) information of each node on the distribution net (or may be referred to as cross points information of three-dimensional matrix net). Each node includes a selector which can connect to or shut off any of the other nodes existing immediately close thereto, and a selector control circuit. Then, the control circuit of the nodes address of which are specified by the route management server 1000 can be put in a standby mode to structure a part of the route by selecting an input side node and an output side node based on a command from the server 1000 to structure a part of the route.

Referring to FIG. 9, an example where a plurality of routes are structured from the base A to the base B will be explained. Hereinafter, an operation based on commands from the route management server 1000 will be explained.

Upon receipt of, for example, notification from the base A, the relay node RU11 sends a link request information to the route management server 1000. The link request information includes information indicative of the base B as a communication party and information of the number of communication routes.

The route management server 1000 specifies the intermediate node RU12 next to the relay node RU11 and designates the relay node RU11 as a link destination. Thereby, the intermediate node RU12 is linked with the relay node RU11. Next, the route management server 1000 specifies the intermediate node RU13 and designates the intermediate node RU12 as a link destination. Thus, the intermediate node RU12 and the intermediate node RU13 are linked. As above, routes are successively structured, and a path to an intermediate node RU1(N-1) (which is not shown), which is one node before the relay node RU1N next to the base B, is formed.

Then, the route management server 1000 specifies the relay node RU1N and designates the intermediate node RU1(N-1) as a link destination. Then, the relay node RU1N is linked to the intermediate node RU1(N-1). Furthermore, the route management server 1000 notifies that the first route is structured to the relay node RU11, base A, and base B (912 and 913).

Then, the system starts the structure of the second route. The management server 1000 specifies the relay node RU21 and designates the base A as a link destination. Thus, the base A and the top relay node RU21 in the second route are linked. Then, the route management server 1000 specifies the intermediate node RU22 and designates the relay node RU21 as a link destination. Thus, the intermediate node RU22 and the relay node RU21 are linked. As above, the second route is successively structured, and a path to the intermediate node RU2(N-1), which is one node before the relay node RU2N next to the base B is formed.

Then, the management server 1000 specifies the relay node RU2N and designates the intermediate node RU2(N-1) (which is not shown) as a link destination. Then, the relay node RU2N is linked to the intermediate node RU2(N-1). Furthermore, the route management server 1000 notifies that the first route is structured to the relay node RU21, base A, and base B (912 and 913).

Then, third route, fourth route, and the like are structured in a similar manner, and the route structuring process stops when the designated number of routes is met.

The aforementioned setting type of key transmission path (route) is a static type; however, it may be a dynamic type. Furthermore, various setting types are adoptable instead of the aforementioned procedure.

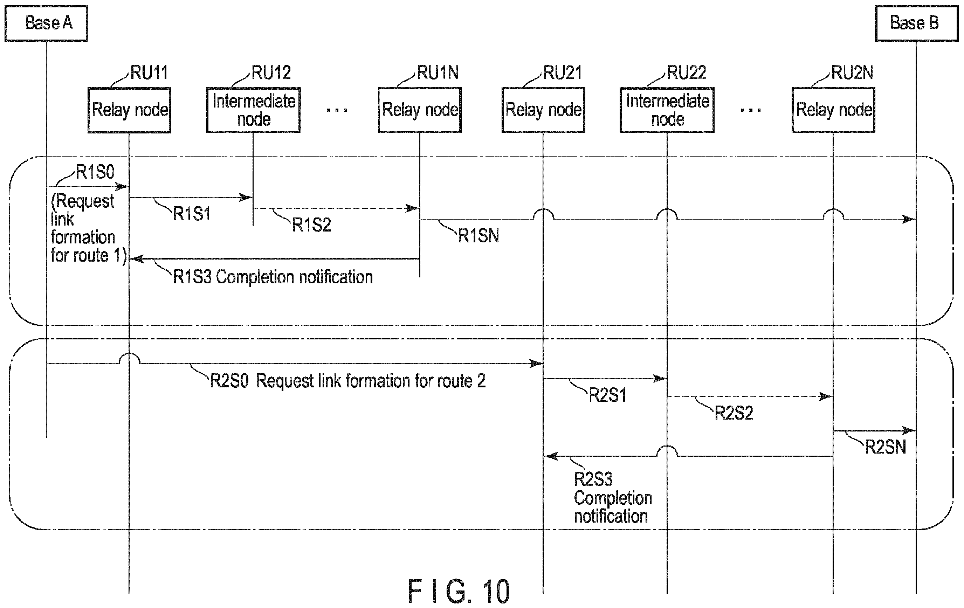

FIG. 10 illustrates a type of setting the key transmission path (route), which is a dynamic type. In the structuring method of the key transmission route, each node is supposed to hold route information.

First, the route information is link data to designate a node to be selected next in order to become closer to a desired relay node (desired base) from the current position, for example. There are multiple relay nodes set, and a next node address (link data) to become closer to each relay node is stored in the memory in advance. Thus, the link formation command data (link request data) includes identification data of the base which is the original sender, addresses (identification data) of relay nodes in the proximity of the sender base, identification data of the base in the receiver side, and addresses (identification data) of relay nodes in the proximity of the receiver base. Each node is transferred for successively structure the route. Thus, the nodes structuring the route can recognize from which base to which base the route is structured.

Referring to FIG. 10, the base A requests the closest relay node RU11 to form the link of a first route (route 1) (give link request data) (step R1S0). Then, the relay node RU11 selects, for example, the intermediate node RU12, forms a link thereto, and gives the link request data to the intermediate node RU12 (step R1S1). Then, the intermediate node RU12 selects a next intermediate node, forms a link thereto, and gives the link request data to the next intermediate node (step R1S2). As above, links are formed successively, and when the route is structured to the relay node RU1N, the relay node RU1N performs notification of completion of structure of the first route with respect to the relay node RU11 (step R1S3). In this step, the notification is sent to the base A. Furthermore, the relay node RU1N performs notification of completion of structure of the first route with respect to the base B (step R1SN). Then, structure of a second route is started.

The base A requests the closest relay node RU21 to form the link of a second route (route 2) (give link request data) (step R2S0). Then, the relay node RU21 selects, for example, the intermediate node RU22, forms a link thereto, and gives the link request data to the intermediate node RU22 (step R2S1). Then, the intermediate node RU22 selects a next intermediate node, forms a link thereto, and gives the link request data to the next intermediate node (step R2S2). As above, links are formed successively, and when the route is structured to the relay node RU2N, the relay node RU2N performs notification of completion of structure of the second route with respect to the relay node RU21 (step R2S3). In this step, the notification is sent to the base A. Furthermore, the relay node RU2N performs notification of completion of structure of the second route with respect to the base B (step R2SN). Then, structure of a third route, a fourth route, and the like is performed in a similar manner.

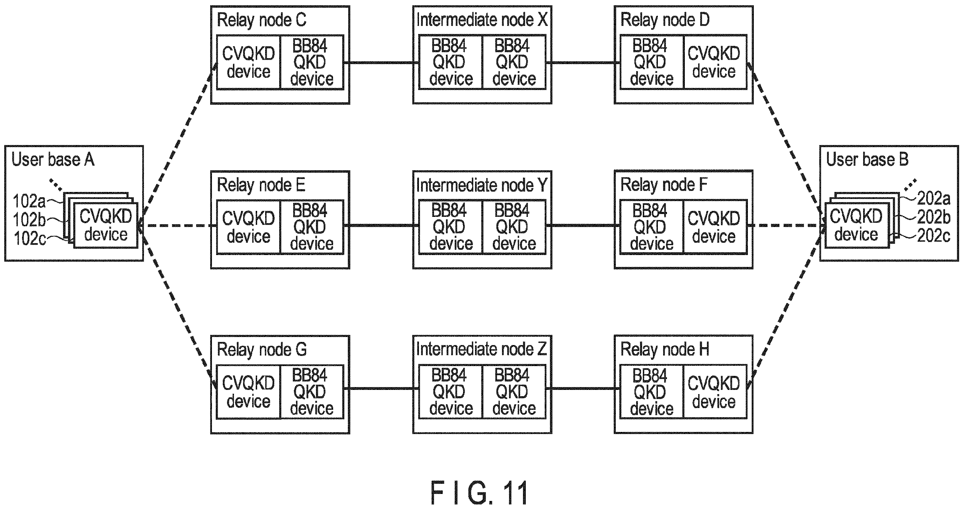

FIGS. 11, 12, and 13 illustrate various examples of combinations of CVQKD devices and BB84QKD devices in the relay nodes and the intermediate nodes. In each example, three routes are structured; however, the number of routes is not limited.

The embodiment of FIG. 11 is structured with relay nodes C, E, and G connected to CVQKD devices 102a, 102b, and 102c in the base A, respectively, where the nodes are structured with CVQKD devices and BB84QKD devices. Each CVQKD device in the relay nodes C, E, and G is connected to each of CVQKD devices 102a, 102b, and 102c.

On the other hand, the relay nodes D, F, and H connected to CVQKD devices 202a, 202b, and 202c in the base B, respectively, are structured with CVQKD devices and BB84QKD devices. In this case, each CVQKD device in the relay nodes D, F, and H is connected to each of CVQKD devices 202a, 202b, and 202c in the base B. Intermediate nodes X, Y, and Z connecting between the relay nodes C, E, and G and the relay nodes D, F, and H are each structured with the BB84QKD device.

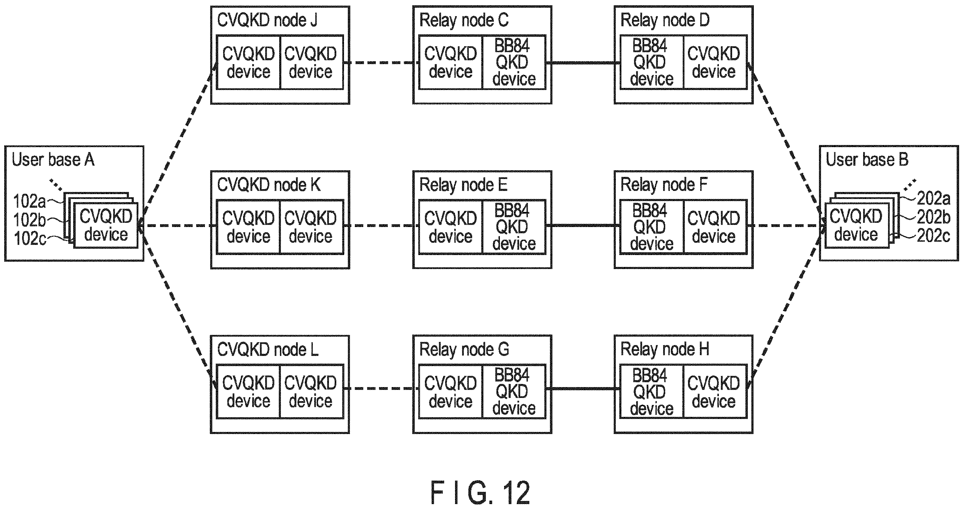

The embodiment of FIG. 12 is structured with nodes (CVQKD nodes) J, K, and L connected to CVQKD devices 102a, 102b, and 102c in the base A, where the nodes are structured with the same type CVQKD devices. On the other hand, the relay nodes D, F, and H connected to the CVQKD devices 202a, 202b, and 202c in the base B are structured with CVQKD devices and BB84QKD devices (as with the case of FIG. 11). The relay nodes C, E, and G between the relay nodes D, F, and H corresponding to the nodes J, K, and L are structured with CVQKD devices in the base A side, and BB84QKD devices in the base B side.

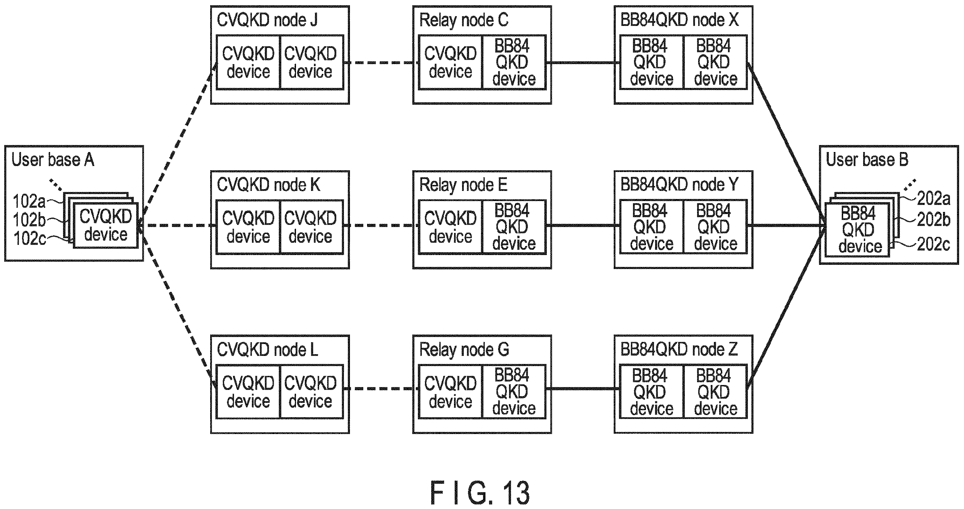

The embodiment of FIG. 13 is structured with CVQKD nodes connected to CVQKD devices 102a, 102b, and 102c in the base A, where the nodes are structured with the same type CVQKD devices.

On the other hand, in the base B, a CVQKD device is not utilized, and BB84QKD devices 202d, 202e, and 202f are disposed. Thus, in three routes closest to the base B, nodes (BB84QKD nodes) X, Y, and Z are each structured with a BB84QKD device.

The relay nodes C, E, and G between the nodes J, K, and L and nodes X, Y, and Z are each structured with the CVQKD device (in the base A side) and the BB84QKD device (in the base B).

As described above, various combinations of CVQKD device and BB84QKD device are adoptable in the relay and intermediate nodes.

Considering the aforementioned structure and the whole embodiments, the combination of the CVQKD devices and the BB84QKD devices may be interpreted as a first quantum cryptographic communication device by which CVQKD devices are applicable to a front end, and a second quantum cryptographic communication device by which BB84QKD devices are applicable to a back end.

Incidentally, in the present system, the cryptographic key is generated by a key sharing module. There are various methods of generation of the cryptographic key, and several examples thereof will be explained below.

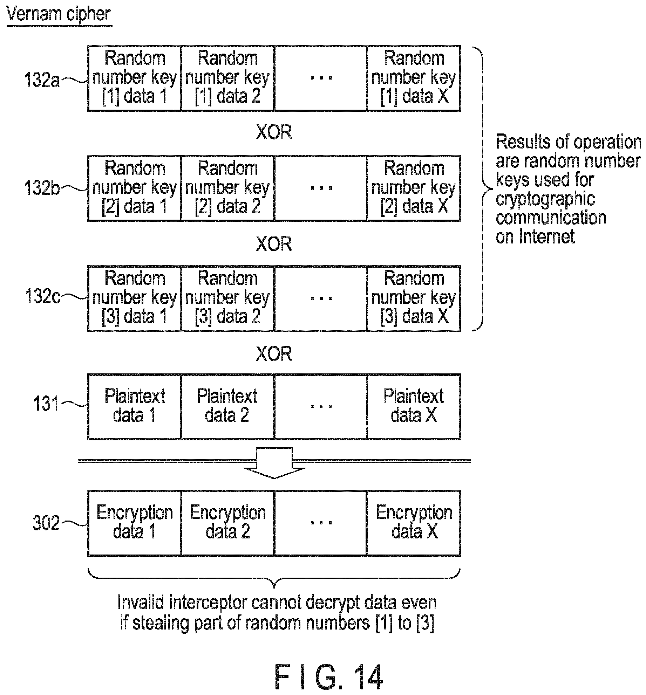

FIG. 14 illustrates a method of generation of a cryptographic key (hereinafter referred to as random number key) 132 in the key sharing module 102, and an example of encryption of plaintext data 131 in the base A. Note that, the cryptographic communication system of FIG. 6 is used for the explanation below.

Now, random number keys divided into three (divided cryptographic keys explained above) are referred to as random number key 1, random number key 2, and random number key 3. In the key sharing module 102 in the base A,

Random number key 1 XOR random number key 2 XOR random number key 3 is calculated to obtain random number key (cryptographic key) 132.

On the other hand, in the cryptographic module 101,

Random number key 132 XOR plaintext data 131 is calculated to obtain the encrypted data 302.

In this example, the cryptographic communication system generates the encrypted data 302 wherein a plurality of divided data of the random number key and the plaintext data 131 are overlapped through Vernam cipher, and thus, even if an invalid interceptor may intrude into any of the intermediate nodes and steal a part of the divided data, a part of the encrypted data 302 communicated between the bases A and B through the Internet (encrypted data transmission system 300) cannot be decrypted.

Furthermore, in this example, in the cryptographic communication system, based on a premise that overlapping through Vernam cipher is performed between the base A and the base B, data necessary for generation of the whole random number key is divided to a plurality of paths (routes) and transmitted/received therebetween, and thus, the random number key (cryptographic key) is shared. Thereby, even if an invalid interceptor may intrude into any of the intermediate nodes on a route, and steal a part of the data necessary for the generation of the random number key, an invalid interceptor cannot decrypt the random number key.

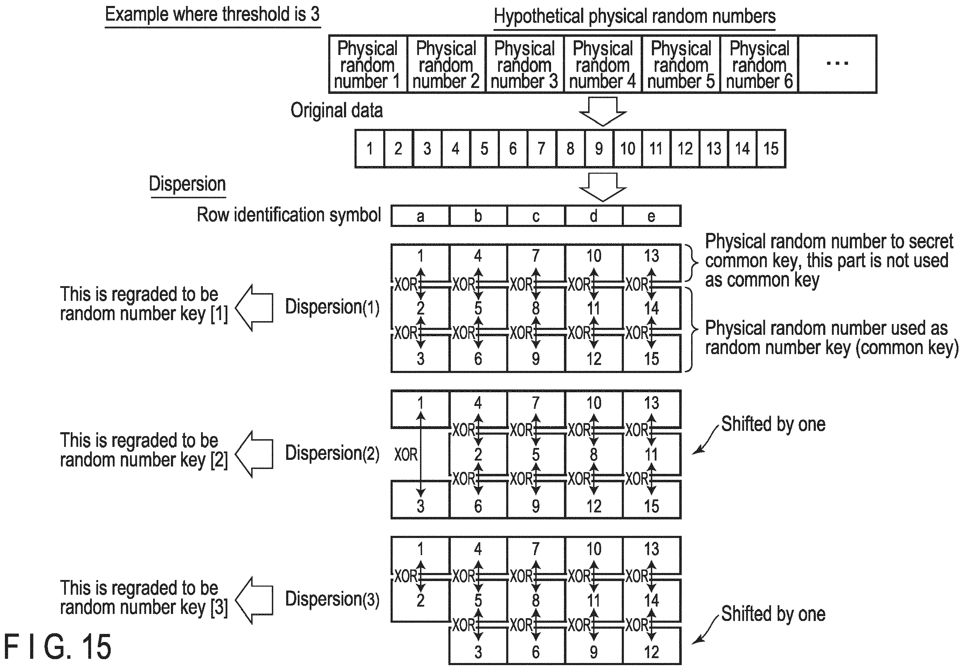

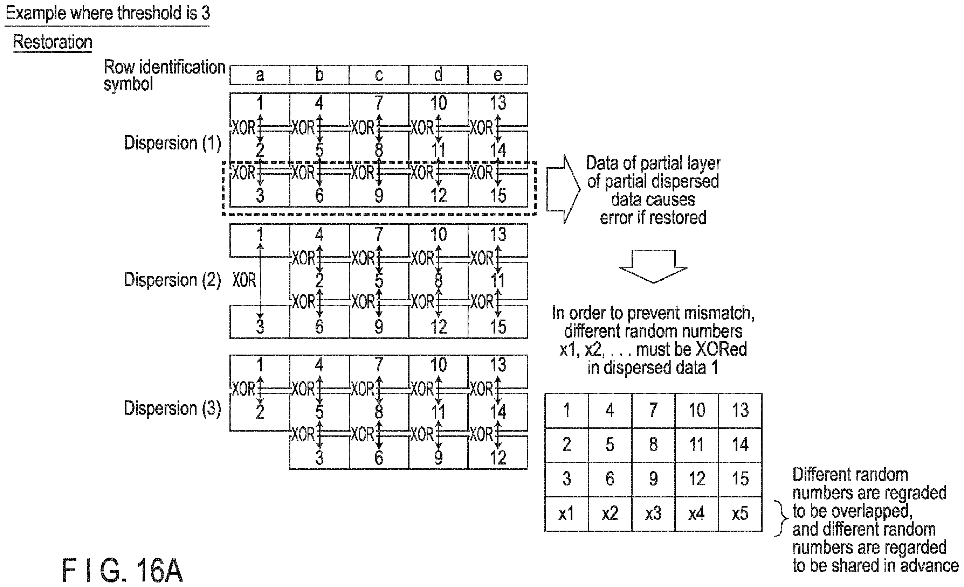

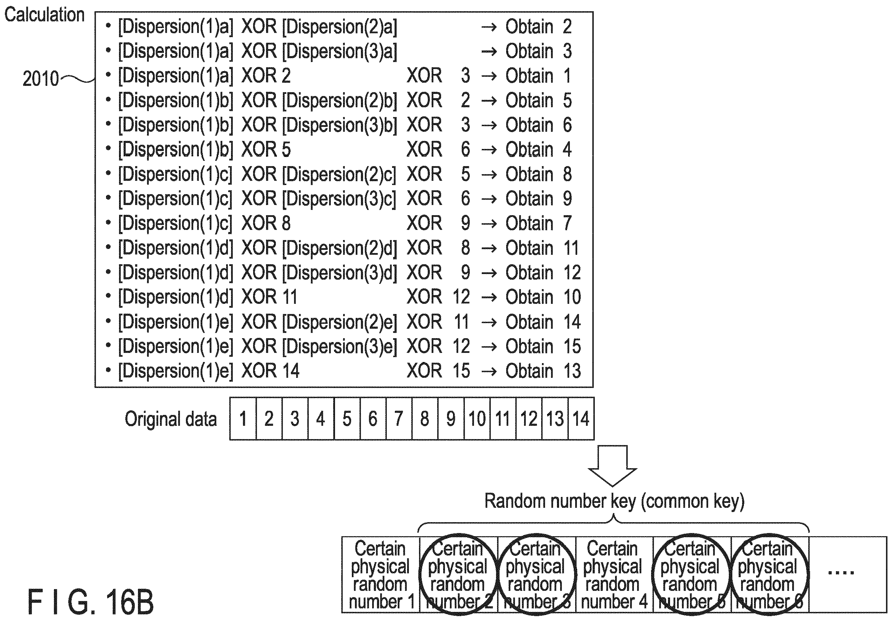

FIG. 15 and FIGS. 16A and 16B illustrate another method of generation and restoration of dispersed cryptographic keys. FIG. 15 illustrates an example of method of generation of random number key 132 in the key sharing modules 102 and 202 in the cryptographic communication system. In this example, random number key 132 (= 132a, 132b, and 132c) is generated based on dispersion number 3, threshold 3 ramp type secret dispersion (in this example, (threshold K=3, L=2, dispersion number N=3) ramp type secret dispersion). In the ramp type secret dispersion, even if one of the three dispersed data (dispersed cryptographic keys) 132a, 132b, and 132c is intercepted, the data restoration cannot be performed. Furthermore, in this example, a ratio of random number (dummy data, that is, disposable physical random number) to plaintext (in this example, common key, that is, physical random number used as random number key 132) is 1:2. In the ramp type, a ratio of random number to plaintext is changeable, and if the ratio of random number to plaintext is (Threshold-1):1, it is specifically referred to as complete secret dispersion.

Now, considered is a case where the key sharing module 102 has a physical random number 2000. Then, the key sharing module 102 recognizes the physical random number as original data 2001, and a dispersion process by threshold 3 ramp type secret dispersion is performed. Then, the key sharing module 102 regards the dispersion generates optionally generated random numbers (random number key 1, random number key 2, and random number key 3). In other words, it is the cryptographic key (random number key) in which the random number key 1, random number key 2, and random number key 3 are regarded to be dispersed.

That is, the key sharing module 102 does not actually generate dispersion data (dispersed cryptographic keys) 132a, 132b, and 132c by secret dispersion in this example. Thus, quantum keys generated by a quantum key distribution function may be utilized for the dispersion data 132a, 132b, and 132c, and efficiency of the physical random number generation is increased.

As above, the present system has characteristics which are not utilized in the data transmission using a simple secret dispersion. Note that, the random number optionally generated here (random number key 1, random number key 2, and random number key 3) may be dispersed by a secret dispersion method into dispersed data 132a, 132b, and 132c; however, in that case, the key sharing module 102 must generate a physical random number for the original data in addition to the quantum key (physical random number) generated by the quantum key delivery function, and thus, efficiency of the physical random number generation is decreased.

The dispersion process of threshold 3 ramp type secret dispersion is further explained. Initially, the original data is divided to the number of threshold. For example, when the original data 2001 is 1 to 15, it is divided into a group of 1, 4, 7, 10, and 13, group of 2, 5, 8, 11, and 14, and group of 3, 6, 9, 12, and 15. FIG. 15 illustrates each group after dividing is represented in a row.

Then, when three dispersed data are generated, in dispersion (2), the second row is shifted by one column, and in dispersion (3), the third row is shifted by one column, and then, convolution by exclusive-or is performed with respect to each of dispersions (1) to (3). Note that, the convolution is not limited to exclusive-or, and may be calculated by a polynomial, or may be addition or subtraction.

After generating the random number, the key sharing module 102 of the base A regards the random number as dispersed data obtained through the aforementioned process (dispersion process by threshold 3 ramp type secret dispersion). That is, the key sharing module 102 generates a plurality of random number columns (random number key 1, random number key 2, and random number key 3), and regards each random number column as dispersed data. The key sharing module 102 allocates the random numbers (dispersed data 19) to per random number column in different routes to be transmitted to the base B.

FIGS. 16A and 16B illustrates an example of a method of acquiring, that is, a method of restoration of the random number key 132 by the key sharing modules 102 and 202 in the cryptographic communication system which distribute the cryptographic key (random number key) as above.

The key sharing modules 102 and 202 use three dispersed data (in reality, simple random numbers) to execute the restoration process by dispersion number 3, threshold 3 ramp type secret dispersion (in this example, (Threshold K=3, L=2, dispersion number N=3) ramp type secret dispersion) (calculation 2010 of FIG. 16B). By the restoration, aforementioned 1 to 15 are obtained as the hypothetical physical random number original data 2001.

Note that, if the restoration process as above is performed without performing the dispersion process by the secret dispersion method, data (original data) of a part of a layer (row) of partial dispersed data is mismatched (when all dispersed data are restored into original data, original data does not match in several dispersed data). In order to prevent mismatch, different random numbers (x1 to x5) are regarded to be XORed in the partial dispersed data. This fact should be regarded as being shared in advance between the key sharing module 102 and the key sharing module 202. Note that, by determining which dispersed data are used to generate the original data in advance or dynamically between the key sharing module 102 and the key sharing module 202, at least the original data generated by the key sharing module 102 and the key sharing module 202 match, and such mismatch is not a problem. Note that, even if there is partial mismatch, the restoration process by the secret dispersion method is performed regarding the physical random numbers (random number key 1, random number key 2, and random number key 3), and thus, the security is sufficient.

In this example, ratio of random number to plaintext is 1:2, and thus, the key sharing module 202 excludes group of 1, 4, 7, 10, and 13 (preliminarily determined one row) from the restored original data 1 to 15 as dummy data (disposable physical random number), and extracts 2, 3, 5, 6, 8, 9, 11, 12, 14, and 15 to generate the random number key 132 to be delivered to the base B.

In the complete secret dispersion, ratio of ransom number to plaintext is (threshold -1:1) (2:1), and thus, the key sharing module 102 excludes 1, 2, 4, 5, 7, 8, 10, 11, 13, and 14 (preliminarily determined two rows) as dummy data (disposable physical random number), and extracts 3, 6, 9, 12, and 15 (preliminarily determined one row) to generate the random number key 132 to be delivered to the base B.

On the other hand, in the key sharing module 202 which received the dispersed data 132a, 132b, and 132c from a terminal node C131, the same calculation as in the key sharing module 102 is performed to generate a random number key 132 used in the base B. The random number key 132 generated by the key sharing module 102 and the random number key 132 generated by the key sharing module 202 are the same. In other words, the random number key (cryptographic key) in the bases A and B is the shared random number key 132.

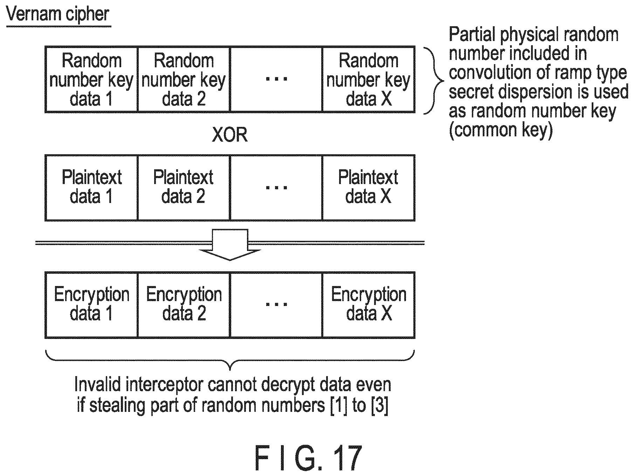

FIG. 17 illustrates an example of encryption of the plaintext data 131 in the base A.

In the base A,
Random number key 132 XOR plaintext data 131 is calculated to obtain encrypted data 302.

As above, by delivering a plurality of dispersed data 132a, 132b, and 132c regarded as being dispersed by the ramp type secret dispersion method (in reality, simple random numbers), even if an invalid interceptor may intrude into any of the intermediate nodes on a route, and steal a part of the dispersed data, information of random number key is not leaked. Thus, even a part of the encrypted data 302 communicated between the bases A and B through the Internet cannot be decrypted.

As above, between the bases A and B (sender node and receiver node), based on a premise that the restoration process by the secret dispersion method is used, the data necessary for the generation of the random number key 132 is divided to a plurality of paths (routes) to be transmitted/received to share the random number key 132 (common key). In this system, even if an invalid interceptor may intrude into any of the intermediate nodes on a route, and steal a part of the data necessary for the generation of the random number key, such an invalid interceptor cannot decrypt the cryptographic key, and the communication of users can be secured. Furthermore, the dispersion number is 3 as with the threshold in this example; however, if the dispersion number = threshold + α (α = 1, 2, 3, ...), the random number key 16 can be generated even if (dispersion number - threshold) dispersed data is vanished, and thus, even if an error occurs in some of the intermediate nodes, the terminal node C131, base A, and base B can share the random number key 132 without any problem.

Note that, in the aforementioned explanation, hypothetical original data is given, restoration by the dispersion number 3, threshold 3 ramp type secret dispersion is executed, and if a ration of random number to plaintext is 1:2, one row (within three rows) is excluded from data obtained by the restoration as a random number (dummy data), and two row data is used as the random number key 16. Here, if the information-theoretic security is given up, all the data obtained by the restoration may be used as plaintext (random number key 132), or not all of one row but a part of the row may be used as a random number. In that case, although the information-theoretic security is not secured, combinations of operators to obtain the original data are vast, and the user cryptographic communication is sufficiently secured. In that case, consuming amount of random numbers can be greatly reduced. Thus, transfer rate is improved accordingly.

If threshold is 2, in order to secure the information-theoretic security, a ratio of random number to plaintext needs to be 1:1; however, as mentioned above, if the information-theoretic security is given up, all of the data obtained from the restoration may be used as plaintext, or, not all of one row (of two rows) but a part of the row may be used as the random number. In that case, although the information-theoretic security is not secured, combinations of operators to obtain the original data are vast, and the user cryptographic communication is sufficiently secured. Thus, the consuming amount of random numbers can be greatly reduced. Note that, the secret dispersion method which can be used is not limited to the above examples, and secret dispersion methods by other exclusive-or and secret dispersion methods by polynomial can be used.

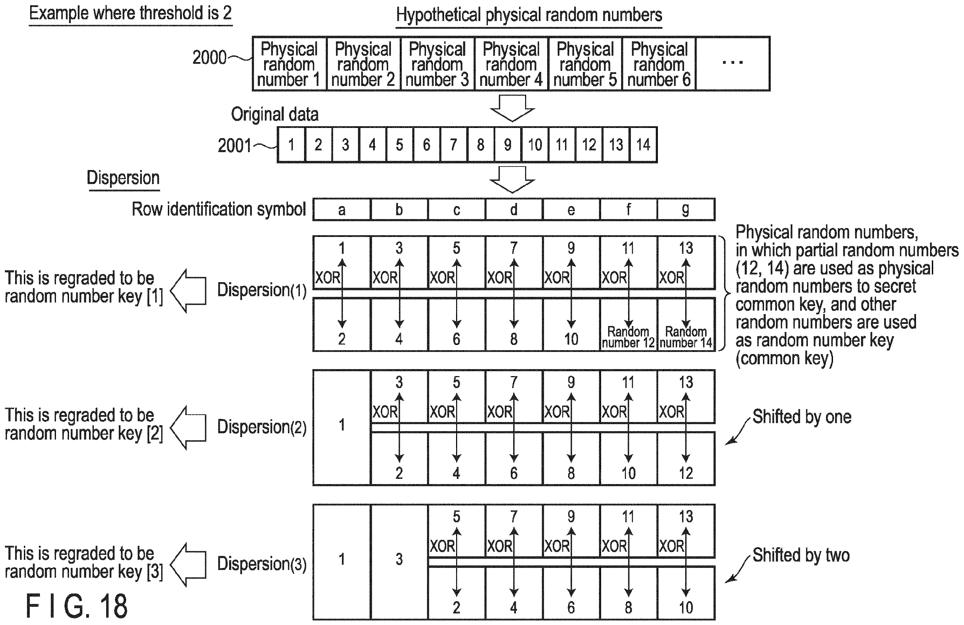

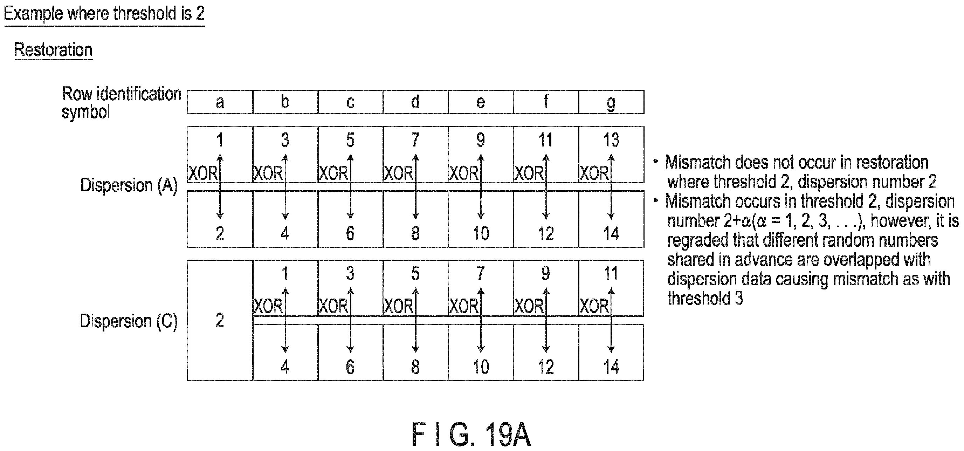

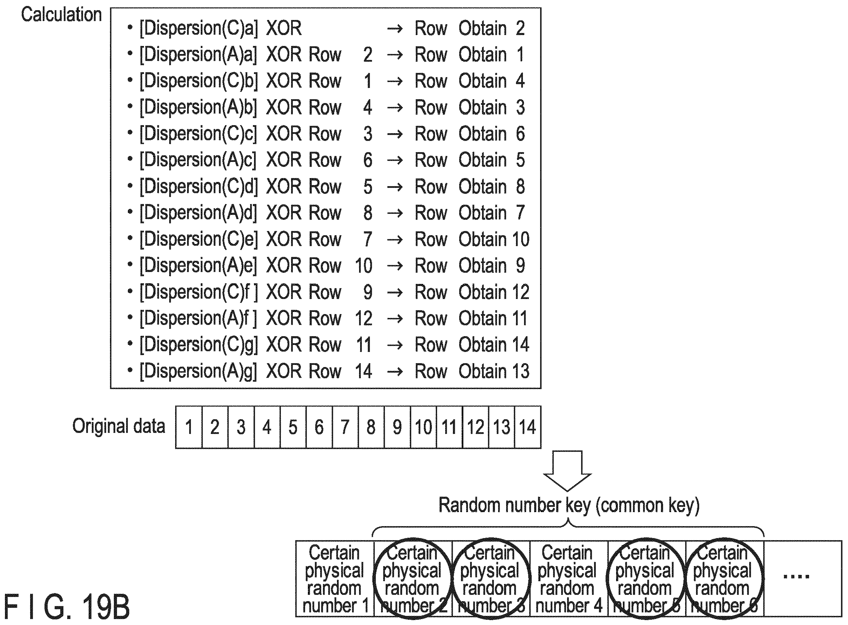

Referring to FIGS. 18 and 19, a method of generation of the random number key 132 by threshold 2 secret dispersion will be explained. FIG. 18 illustrates an example of a method of generation of the random number key 132 by threshold 2, dispersion number 3 secret dispersion.

The key sharing module 102 includes a hypothetical physical random number. Furthermore, the key sharing module 102 regards the physical random number as the original data, and performs the dispersion process by the threshold 2 secret dispersion method. The key sharing module 102 regards that an optionally generated random number (random number key 1, random number key 2, and random number key 3) is obtained through the dispersion process. That is, the key sharing module 102 does not actually generate the dispersed data 132 through the secret dispersion. The present system has characteristics which do not appear in the data transfer using a simple secret dispersion. As described above, the secret dispersion process may be actually performed, but in that case, efficiency of the physical random number generation is lowered.

The threshold 2 secret dispersion is further explained. Initially, the original data are divided into the number of threshold. For example, if the original data is 1 to 14, the data is divided into a group of 1, 3, 5, 7, 9, 11, and 13 and a group of 2, 4, 6, 8, 10, 12, and 14. FIG. 18 represents each group after division as a row.

Then, when the generation of three dispersed data is performed, in dispersion (2), second row is shifted by one column, and in dispersion (3), second row is shifted by two columns, and then, convolution by exclusive-or is performed with respect to each of dispersions (1) to (3). Note that, the convolution is not limited to exclusive-or, and may be calculated by a polynomial, or may be addition or subtraction.

After generating the random number, the key sharing module 102 regards the random number as dispersed data obtained through the aforementioned process (dispersion process by threshold 2 secret dispersion). The key sharing module 102 allocates the random numbers (dispersed data 132) to per random number column (random number key 1, random number key 2, and random number key 3) in different routes to be transmitted to the key sharing module 202.

FIGS. 19A and 19B illustrates an example of a method of generation (restoration process) of the random number key 132 by the threshold 2 secret dispersion.

The key sharing module 202 uses two dispersed data A and C (in reality, simple random numbers) to execute the restoration process by dispersion number 3, threshold 2 secret dispersion (calculation 2020 of FIG. 19B). By the restoration, the aforementioned hypothetical physical random number original data 1 to 14 are obtained.

Note that, with the threshold 2, dispersion number 2 ramp type secret dispersion, a mismatch does not occur in the restoration. However, if threshold 2, dispersion number 2+α (α = 1, 2, 3, ...) secret dispersion is utilized for the restoration, as with the aforementioned dispersion number 3, threshold 3 ramp type secret dispersion, data of partial layer of a part dispersion data mismatch. Thus, as with the case of the aforementioned dispersion number 3, threshold 3 ramp type secret dispersion, preliminarily shared different random numbers are regarded to be overlapping.

Through the generation of the random number key 16 by the threshold 2 secret dispersion, the cryptographic communication system of the second embodiment delivers a plurality of dispersed data (actually, simple random numbers) regarded as being dispersed by the secret dispersion, even if an invalid interceptor may intrude into any of the intermediate nodes on a route, and steal a part of the dispersed data 19, a part of the encrypted data 303 communicated between the bases A and B on the Internet 300 cannot be decrypted.

Furthermore, in this example, threshold is 2 and dispersion number is 3, and thus, the random number key 132 can be generated even if (dispersion number - threshold) = one dispersion data is vanished. Thus, even if an error occurs in some of the intermediate nodes, the key sharing module 102 and the key sharing module 202 can share the random number key 132 without any problem. Note that, for simpler explanation, the secret dispersion method of FIGS. 18, 19A and 19B is used in this example; however, the secret dispersion method which can be used is not limited to the above examples, and secret dispersion methods by other exclusive-or and secret dispersion methods by polynomial can be used.

Technical features of the aforementioned embodiments will be noted below. First, the structures of the bases A and B will be explained.

A1) According to an embodiment, a device A of a user base includes a cryptographic module 101 to transmit encrypted data, and a key sharing module 102 including a function to restore and disperse a cryptographic key used to generate the encrypted data. Then, the key sharing module 102 includes a plurality of CVQKD devices 102a and 102b to deliver a plurality of random number keys dispersed from the cryptographic key into different routes and to receive the dispersed cryptographic keys sent from the different routes, wherein the CVQKD devices 102a and 102b are quantum-connected to a CVQKD device in a relay node provided with each of the different routes.

Furthermore, the CVQKD devices 102a and 102b are connected to a dispersion/restoration circuit 102c of the cryptographic key in order to disperse the cryptographic key and to restore the dispersed cryptographic keys.

A2) The key sharing module 102 transmits the dispersed cryptographic keys (random number keys) through a secret dispersion method with respect to the different routes.

A3) The different routes are a quantum cryptographic distribution net in which a plurality of nodes are arranged in a mesh manner.

A4) The different routes are a quantum cryptographic distribution net in which a plurality of nodes are arranged in a mesh manner, and the key sharing module 102 designates any of the nodes of the quantum cryptographic distribution net, and includes a processor for structuring paths to distribute the dispersed cryptographic keys.

B1) According to another embodiment, a cryptographic communication system includes a first base A and a second base B connected with each other by an encrypted data transmission system, and the first base A includes a plurality of CVQKD devices to deliver dispersed cryptographic keys to the second base B, wherein the CVQKD devices are connected to a plurality of cryptographic key distribution routes.

In a middle of the cryptographic key distribution routes, a relay node integrally includes a CVQKD device in the delivery route and a BB84QKD device to process an output of the CVQKD device by BB84 protocol to be output to the base B.

B2) A cryptographic communication method, in which dispersed cryptographic keys are distributed using the cryptographic communication system, the CVQKD devices in the base, and the relay nodes, is provided.

B3) The first base A includes first and second CVQKD devices 102a and 102b to deliver the dispersed cryptographic keys to the second base B, wherein the first and second CVQKD devices 102a and 102b are connected to third and fourth CVQKD devices 441 and 611 in first and second relay nodes disposed in the first and second cryptographic key distribution routes.

B4) The first and second relay nodes include BB84QKD devices 412 and 612 to receive outputs from the third and fourth CVQKD devices 441 and 611.

B5) The cryptographic key distribution routes are a quantum cryptographic distribution net in which a plurality of nodes are arranged in a mesh manner.

B6) Means of delivering a plurality of random number keys dispersed from the cryptographic key into different routes and receiving the dispersed cryptographic keys sent from the different routes is the key sharing module 102, and the cryptographic key distribution routes are a quantum cryptographic distribution net in which a plurality of nodes are arranged in a mesh manner, and
the key sharing module sends dispersed cryptographic keys (random number keys) through a secret dispersion method with respect to the cryptographic key distribution routes.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

Furthermore, even if each structural element of the claims is expressed as divided, or integrated with another structural element, or combined with another structural element, such expression is deemed within the scope of the invention. Furthermore, multiple embodiments may be combined, and examples realized by such a combination is within the scope of the invention.

Furthermore, figures may be schematically illustrated for further clarification of the explanation, and thus, width, thickness, shape, and the like are different from those of the actual embodiments. Furthermore, the present invention is applicable to a case where a claim is represented as a control logic, or as program including computer-executable instructions, or as computer readable recording medium describing the instructions. Furthermore, names and terms used in the claims are not limited thereto, and as long as the same contents and the same concepts are substantially kept, other expressions are deemed within the scope of the invention.

## Claims

1. A user base device comprising a cryptographic module (101) configured to transmit encrypted data and a key sharing module (102) configured to restore and disperse a cryptographic key used to generate the encrypted data, **characterized in that**
the key sharing module (102) includes a quantum cryptographic communication device (102a, 102b) applicable to a plurality of front ends in order to deliver a plurality of random number keys which are based on the dispersed cryptographic key in different routes (400, 600) and to receive the dispersed cryptographic key delivered through the different routes (400, 600), the quantum cryptographic communication device (102a, 102b) applicable to the front ends are quantum-connected to a quantum cryptographic communication device (102a, 102b) applicable to a frontend in a relay node (C, 601) provided with each of the different routes (400, 600), and
the quantum cryptographic communication device (102a, 102b) applicable to the front ends are connected to a cryptographic key dispersion/restoration circuit in order to disperse the cryptographic key and to restore the dispersed cryptographic key.

2. The user base device of claim 1, **characterized in that** the key sharing module sends a cryptographic key (random number key) dispersed by a secret dispersion method through the different routes.

3. The user base device of claim 1, **characterized in that** the different routes are a quantum cryptographic distribution net in which a plurality of nodes are arranged in a mesh manner.

4. The user base device of claim 1, **characterized in that**
the different routes are a quantum cryptographic distribution net in which a plurality of nodes are arranged in a mesh manner, and
the key sharing module specifies any of the nodes of the quantum cryptographic distribution net, and includes a processor for structuring paths to distribute the dispersed cryptographic keys.

5. A cryptographic communication system **characterized by** comprising:
a first base and a second base connected with each other through an encrypted data transmission system, wherein
the first base includes a quantum cryptographic communication device applicable to a plurality of front ends in the base in order to deliver a plurality of dispersed cryptographic keys to the second base, and the quantum cryptographic communication device applicable to the front ends is connected to a plurality of cryptographic key distribution routes, and
in a halfway through each of the cryptographic key distribution routes, a relay node integrally including a quantum cryptographic communication device applicable to a front end in the distribution route and a quantum cryptographic communication device applicable to a backend to process an output of a cryptographic communication device applicable to the front end and to output the processed output to the second base, is disposed.

6. The cryptographic communication system of claim 5, **characterized in that**
the first base includes a quantum cryptographic communication device applicable to first and second front ends in the base in order to deliver a plurality of dispersed cryptographic keys to the second base, and
the quantum cryptographic communication device applicable to the first and second front ends is connected to a quantum cryptographic communication device applicable to third and fourth front ends in first and second relay nodes arranged in the first and second cryptographic key distribution routes.

7. The cryptographic communication system of claim 6, **characterized in that** the first and second relay nodes include a quantum cryptographic communication device applicable to a backend which receives an output of the quantum cryptographic communication device applicable to the third and fourth front ends.

8. The cryptographic communication system of claim 1, **characterized in that** the cryptographic key distribution routes are a quantum cryptographic distribution net in which a plurality of nodes are arranged in a mesh manner.

9. The cryptographic communication system of claim 5, **characterized in that**
means to deliver a plurality of random number keys which are the dispersed cryptographic keys through a plurality of cryptographic key distribution routes and to receive the dispersed cryptographic keys sent from the cryptographic key distribution routes includes a key sharing module,
the cryptographic key distribution routes are a quantum cryptographic distribution net in which a plurality of nodes are arranged in a mesh manner, and
the key sharing module sends a cryptographic key (random number key) dispersed by a secret dispersion method through the different routes.

10. A cryptographic communication method using a user base device including a cryptographic module to transmit encrypted data and a key sharing module having a function to restore and disperse a cryptographic key used to generate the encrypted data, the method **characterized by** comprising:
using a quantum cryptographic communication device applicable to a plurality of front ends to deliver a plurality of random number keys which are cryptographic keys dispersed by the key sharing module through different routes and to receive the dispersed cryptographic keys sent from the different routes; and
by the key sharing module,
performing quantum distribution of the dispersed cryptographic keys with respect to a quantum cryptographic communication device applicable to a front end in each of a plurality of relay nodes provided with each of the different routes through the quantum cryptographic communication device applicable to the front ends; and
restoring the dispersed cryptographic keys quantum-received from the quantum cryptographic communication device applicable to the front end in each of the relay nodes through the quantum cryptographic communication device applicable to the front ends by a dispersion/restoration circuit of the cryptographic key.

11. A cryptographic communication method comprising a first base and a second base connected with each other through an encrypted data transmission system, **characterized in that**
the first base includes a quantum cryptographic communication device applicable to a plurality of front ends in the base in order to deliver a plurality of dispersed cryptographic keys to the second base, and the quantum cryptographic communication device applicable to the front ends is connected to a plurality of cryptographic key distribution routes, and
in a halfway through each of the cryptographic key distribution routes, a relay node integrally including a quantum cryptographic communication device applicable to a front end in the distribution route and a quantum cryptographic communication device applicable to a backend to process an output of a cryptographic communication device applicable to the front end and to output the processed output to the second base, is disposed.
